# EUROPÄISCHE PATENTSCHRIFT

(11) **EP 4 345 323 B1**
(45) Veröffentlichungstag und Bekanntmachung des Hinweises auf die Patenterteilung: **21.10.2026**
(21) Anmeldenummer: 24152104.6
(22) Anmeldetag: 29.07.2019
(51) Int. Cl.: B60J 5/04, F16B 5/06, F16B 5/12, F16B 21/07, F16B 25/00, F16B 35/06

(54) **TÜRBAUGRUPPE MIT BEFESTIGUNGSELEMENT UND MONTAGEVERFAHREN**
DOOR ASSEMBLY WITH FASTENER AND METHOD OF ASSEMBLY
ENSEMBLE DE PORTE AVEC ÉLÉMENT DE FIXATION ET PROCÉDÉ DE MONTAGE

(30) Priorität: 30.07.2018 DE 102018212692
(43) Veröffentlichungstag der Anmeldung: 03.04.2024
(62) Dokumentnummer(n) der früheren Anmeldung(en) nach Art. 76 EPÜ: 19749287.9 / 3 829 908
(73) Patentinhaber: Brose Fahrzeugteile SE & Co. Kommanditgesellschaft, Bamberg, 96052 Bamberg (DE)
(72) Erfinder: THIENEL, Michael, 95349 Thurnau (DE); HOFMANN, Dominik, 96148 Baunach (DE)
(74) Vertreter: Maikowski & Ninnemann Patentanwälte Partnerschaft mbB

(56) Entgegenhaltungen:
- DE-A1- 19 838 560
- DE-A1- 19 914 189
- US-A1- 2015 101 458

## Beschreibung

Die Erfindung betrifft eine Türbaugruppe für ein Kraftfahrzeug nach dem Oberbegriff des Anspruchs 1 sowie ein Verfahren nach dem Oberbegriff des Anspruchs 11.

Eine gattungsgemäße Türbaugruppe umfasst unter anderem eine Türhaut, die zum Beispiel durch ein Türinnenblech gebildet sein kann. An der Türhaut kann ein Trägerbauteil vorgesehen sein, das dazu ausgebildet ist, wenigstens eine innerhalb eines in dem Kraftfahrzeug ausgebildeten Bauraums anzuordnende Funktionskomponente zu tragen. Ein solches Trägerbauteil kann zum Beispiel ein Aggregateträger für eine Kraftfahrzeugtür sein, an dem zum Beispiel Teile eines Kraftfahrzeugfensterhebers oder mindestens ein Lautsprecher befestigt sind. Weiterhin umfasst eine Türbaugruppe ein Innenverkleidungsbauteil, das regelmäßig mit Befestigungsmitteln an der Türhaut befestigt ist und die Funktionskomponenten verdeckt, wie in der US 8,020,919 B2, der DE 198 38 560 A1 oder der DE 199 14 189 A1 gezeigt. Ein wichtiges Qualitätsmerkmal für die optimale Anbringung des Trägerbauteils ist ein kleines Spaltbild zwischen dem Innenverkleidungsbauteil und der Türhaut.

Ein kleines Spaltbild ist aus Fertigungsgründen nur mit erheblichem Aufwand erreichbar, wenn keine Anbringung des Innenverkleidungsbauteils an der Türhaut möglich ist. Dies ist zum Beispiel der Fall bei einem flächigen Trägerbauteil, das die Türhaut überdeckt. In dem Fall kann das Innenverkleidungsbauteil nur an dem Trägerbauteil angebracht werden. Da das Trägerbauteil jedoch mit einer gewissen Toleranz an der Türhaut angebracht ist und das Innenverkleidungsbauteil wiederum mit einer gewissen Toleranz an dem Trägerbauteil angebracht ist, kommt es zu einer Aufsummierung von Toleranzen, die das Spaltbild unter Umständen vergrößert. Dadurch verschlechtert sich die optische Qualitätsanmutung der Türbaugruppe.

Der vorliegenden Erfindung liegt daher die Aufgabe zugrunde, eine Türbaugruppe, insbesondere mit einem flächigen Trägerbauteil, zu verbessern und die Anbringung des Innenverkleidungsbauteils zu optimieren.

Diese Aufgabe wird mit der Türbaugruppe des Anspruchs 1 und einem Verfahren zur Montage der Türbaugruppe nach Anspruch 11 gelöst.

Bei einer vorgeschlagenen Türbaugruppe ist ein Trägerbauteil mit mindestens einem Befestigungselement an der Türhaut befestigt, wobei das mindestens eine Befestigungselement erfindungsgemäß auch zur Befestigung des Innenverkleidungsbauteils genutzt ist. Erfindungsgemäß sind mehrere Befestigungselemente an einem umfangseitigen Rand des Trägerbauteils angeordnet. Dadurch ist eine maximale Ausnutzung der Fläche des Trägerbauteils möglich. Zur Befestigung des Innenverkleidungsbauteils steht jedes Befestigungselement an dem Trägerbauteil mit einem in einem Querschnitt T-förmigen Kopfabschnitt vor. An den Kopfabschnitten ist das Innenverkleidungsbauteil festgelegt. Derart ist eine Befestigung des Innenverkleidungsbauteils an den Befestigungselementen ermöglicht.

Zur Festlegung an den Kopfabschnitten umfasst das Innenverkleidungsbauteil mehrere Rastabschnitte, mit denen jeweils ein Kopfabschnitt zusammenwirken kann. Erfindungsgemäß sind die Rastabschnitte mit jeweils einem Kopfabschnitt mechanisch verrastet.

Die Rastabschnitte können in einer Ausführung eine Aufnahme umfassen, die weitbar sein kann. Eine weitbare Aufnahme kann ein Aufnehmen des Kopfabschnitts ermöglichen, wenn der Kopfabschnitt gegen die Aufnahme gedrückt wird. Alternativ kann die Aufnahme starr sein. Beim Vorsehen einer weitbaren Aufnahme kann der Kopfabschnitt gegen die weitbare Aufnahme gedrückt werden, so dass die Aufnahme sich weitet bis der Kopfabschnitt die Aufnahme passieren kann. Nachdem der Kopfabschnitt die Aufnahme passiert hat, kann sich die Aufnahme wieder verengen. Mit anderen Worten ist die Aufnahme ausgebildet, während der Passage des Kopfabschnitts eine vergrößerte Durchgangsöffnung durch elastisch nachgiebige Seitenwände bereitzustellen und, nachdem der Kopfabschnitt die Aufnahme passiert hat, in einen Ursprungszustand mit kleinerer Durchgangsöffnung zurückzukehren.

Eine mögliche Ausführung des Kopfabschnitts ist ein Kopfabschnitt mit einer sich zur Spitze hin verjüngenden Querschnittsform wie beispielsweise einer Kugelform, Kegelform oder Kegelstumpfform. Zur Herstellung einer formschlüssigen und/oder kraftschlüssigen Verbindung zwischen dem Kopfabschnitt und dem Innenverkleidungsbauteil ist die Querschnittsform des Kopfabschnitts T-förmig. Mögliche Beispiele für eine T-förmige Querschnittsform umfassen eine pilzförmige und schraubenkopfförmige Ausführung des Kopfabschnitts, wobei bei der schraubenkopfförmigen Ausführung insbesondere ein Kugelkopf oder ein Zylinderkopf verwendet werden können.

In einem Ausführungsbeispiel umfasst jedes Befestigungselement einen (elastisch) verformbaren Kopfabschnitt. Ein verformbarer Kopfabschnitt kann zumindest lokal komprimiert werden, wenn der Kopfabschnitt gegen die Aufnahme gedrückt wird. Dadurch kann dann der Kopfabschnitt die Aufnahme passieren. Das heißt, ein Durchmesser des Kopfabschnitts senkrecht zur Einführrichtung in die Aufnahme kann während der Passage durch die Aufnahme kleiner sein, als in einem Zustand, nachdem der Kopfabschnitt die Aufnahme passiert hat und über den Kopfabschnitt eine Verrastung bereitgestellt ist.

In einem Ausführungsbeispiel umfasst der Kopfabschnitt mindestens ein Rastelement zum Verrasten des Kopfabschnitts mit dem Innenverkleidungsbauteil. Das mindestens eine Rastelement kann durch einen Rasthaken gebildet sein. Geeignete Rasthaken können durch Kunststoffclips gebildet sein. In einer Ausführung sind die Kunststoffclips an das Befestigungselement angespritzt. In einer Ausführung mit mindestens zwei Rastelementen können die mindestens zwei Rastelemente zueinander hin biegbar sein, so dass der Kopfabschnitt zumindest lokal verformbar ist. Dazu können die mindestens zwei Rastelemente so ausgebildet sein, dass die mindestens zwei Rastelemente durch den beim Einstecken des Kopfabschnitts in die Aufnahme erzeugten Druck zueinander hinbiegbar sind.

Grundsätzlich kann durch das Verbiegen des mindestens einen Rastelementes ein Durchmesser des Kopfabschnitts senkrecht zur Einsteckrichtung verkleinerbar sein. Durch das Zurückschnappen des mindestens einen Rastelementes nach der Passage durch die Aufnahme ist der Kopfabschnitt dann mit dem Rastabschnitt des Innenverkleidungsbauteils verrastet.

Erfindungsgemäß umfassen die Befestigungselemente jeweils einen Schaftabschnitt, der formschlüssig und/oder kraftschlüssig mit der Türhaut verbunden ist. Um eine formschlüssige und/oder kraftschlüssige Verbindung mit den Befestigungselementen zu ermöglichen, kann die Türhaut mindestens ein Durchgangsloch aufweisen. Durch das Durchgangsloch kann der Schaftabschnitt durch oder in die Türhaut ragen. Beispielsweise kann der Schaftabschnitt mit der Türhaut verschraubt sein. Der Schaftabschnitt weist zum Verschrauben mit der Türhaut einen Gewindeabschnitt mit einem Gewinde auf, über das der Gewindeabschnitt mit der Türhaut verschraubt ist.

Um das Trägerbauteil mit den jeweiligen Befestigungselementen an der Türhaut zu befestigen, ist der Schaftabschnitt in einem weiteren Ausführungsbeispiel zum Erzeugen eines Durchbruchs im Trägerbauteil ausgebildet. Dadurch kann bei der Befestigung des Trägerbauteils an der Türhaut der Durchbruch an einer geeigneten Stelle im Trägerbauteil erzeugt werden. Beispielsweise kann die geeignete Stelle durch eine Markierung auf dem Trägerbauteil angezeigt sein. Im Hinblick auf die Fertigung ist ein Erzeugen des Durchbruchs beim Befestigen des Trägerbauteils kostengünstiger und zeitsparender im Vergleich zu beispielsweise einem vorgefertigten Durchbruch.

Der Schaftabschnitt kann zum Erzeugen des Durchbruchs im Trägerbauteil mit einem spitzen Ende ausgebildet sein, das bei der Befestigung des Trägerbauteils an der Türhaut durch das Trägerbauteil hindurch stechen kann. Ebenso ist es denkbar, dass der Gewindeabschnitt zum Erzeugen des Durchbruchs im Trägerbauteil bei der Befestigung des Trägerbauteils an der Türhaut ausgebildet ist. Das Gewinde des Gewindeabschnitts kann zum Beispiel als ein selbstschneidendes Gewinde ausgebildet sein.

Das Trägerbauteil kann an der Türhaut anliegen. Ebenso kann das Trägerbauteil in einfacher Weise an der Türhaut unbeweglich fixiert sein. Zum Beispiel können am Schaftabschnitt angeordnete Elemente eingeschränkt zur Fixierung des Trägerbauteils genutzt sein. Die Elemente können zum Beispiel durch das Gewinde des Gewindeabschnitts verwirklicht sein, das mit einem Innengewinde des Durchbruchs zusammenwirkt. Ebenso können die Elemente durch eine Änderung der Querschnittsform des Schaftabschnitts entlang einer Verbindungsachse zwischen der Türhaut und dem Trägerbauteil verwirklicht sein. Beispielsweise kann ein Absatz am Schaftabschnitt ausgebildet sein. Der Absatz kann so positioniert sein, dass das Trägerbauteil mit der einen flächigen Seite an dem Absatz anliegt und mit der anderen flächigen Seite an der Türhaut anliegt. Es wäre dann zum Beispiel möglich, das Trägerbauteil mittels des Befestigungselements zwischen dem Absatz und der Türhaut festzulegen.

Insbesondere bei einer runden Querschnittsform kann der Durchmesser des Schaftabschnitts entlang der Verbindungsachse vom Gewindeabschnitt kommend an einem Absatz vergrößert sein. Der Absatz kann senkrecht zu der Verbindungsachse verlaufen. Der Absatz kann ringförmig am Schaftabschnitt ausgebildet sein. In einem Ausführungsbeispiel ist der Absatz entlang der Verbindungsachse am Gewindeabschnitt angeordnet.

Ein weiterer Aspekt der vorliegenden Erfindung betrifft ein Verfahren zur Montage der Türbaugruppe, bei dem das Trägerbauteil mit mehreren Befestigungselementen an der Türhaut befestigt wird. Erfindungsgemäß wird das Innenverkleidungsbauteil über die mehreren Befestigungselemente, die jeweils auch für die Befestigung des Trägerbauteils an dem Innenverkleidungsbauteil genutzt werden, an dem Trägerbauteil befestigt, indem das Innenverkleidungsbauteil jeweils an einem in einem Querschnitt T-förmigen Kopfabschnitt eines Befestigungselements festgelegt wird.

Für die Befestigung des Innenverkleidungsbauteils an dem Trägerbauteil ist das Innenverkleidungsbauteil mit dem Kopfabschnitt der Befestigungselemente jeweils formschlüssig und/oder kraftschlüssig verbunden. Beispielsweise kann das Innenverkleidungsbauteil an dem Kopfabschnitt eingeschnappt werden.

In einer Ausführungsvariante des Verfahrens wird das Innenverkleidungsbauteil an dem Kopfabschnitt festgelegt, nachdem das Trägerbauteil an der Türhaut befestigt wurde.

Für die Befestigung des Trägerbauteils an der Türhaut kann mittels der Befestigungselemente jeweils ein Durchbruch im Trägerbauteil erzeugt werden. Beispielsweise kann der Durchbruch mittels eines Gewindeabschnitts der Befestigungselemente, der ein selbstschneidendes Gewinde aufweist, erzeugt werden.

Ein vorgeschlagenes Montageverfahren eignet sich insbesondere für die Montage einer vorgeschlagenen Türbaugruppe. Vorstehend und nachstehend für Ausführungsvarianten einer Türbaugruppe erläuterte Merkmale und Vorteile gelten somit auch für Ausführungsvarianten eines Montageverfahrens und umgekehrt.

Der der Erfindung zugrunde liegende Gedanke soll nachfolgend anhand der in den Figuren dargestellten Ausführungsbeispiele näher erläutert werden.

Es zeigen:
- Fig. 1: Explosionsdarstellung einer Türbaugruppe;
- Fig. 2: Ausschnitt aus Fig. 1 mit einem Befestigungselement im Querschnitt;
- Fig. 3A: Schnittansicht Seitenansicht eines Befestigungselements mit angespritztem Kunststoffclip; und
- Fig. 3B: perspektivische Ansicht eines Befestigungselements mit angespritztem Kunststoffclip.

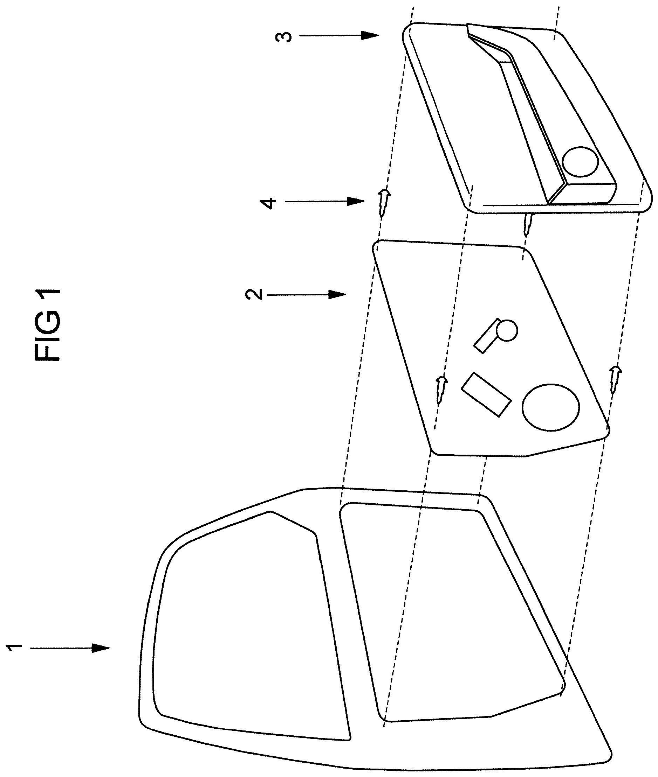

Fig. 1 zeigt eine Türbaugruppe mit einer Türhaut 1, einem Trägerbauteil 2 und einem Innenverkleidungsbauteil 3, wobei das Trägerbauteil 2 mit - in dieser Ausführung - vier Befestigungselementen 4 an der Türhaut 1 befestigt wird, die in dieser Ausführung an einem umfangseitigen Rand des Trägerbauteils 2 angeordnet sind. Zur Befestigung des Trägerbauteils 2 an der Türhaut 1 werden an dem Trägerbauteil 2 mittels der Befestigungselemente 4 Durchbrüche 21 erzeugt, die beispielsweise vorab auf dem Trägerbauteil 2 gekennzeichnet sein können. Danach werden die Befestigungselemente 4 an der Türhaut 1 befestigt, so dass das Trägerbauteil 2 mittels der Befestigungselemente 4 an der Türhaut 1 befestigt ist.

Üblicherweise wird das Innenverkleidungsbauteil 3 nach der Anordnung des Trägerbauteils 2 an der Türhaut 1 angeordnet. Jedoch kann insbesondere bei Verwendung eines flächigen Trägerbauteils 2 eine mögliche Anbringungsfläche für das Innenverkleidungsbauteil 3 an der Türhaut 1 verdeckt sein. Weiterhin kann es wünschenswert sein, zusätzliche Elemente zur Anordnung des Innenverkleidungsbauteils 3 an der Türhaut einzusparen. Daher wird das Innenverkleidungsbauteil 3 erfindungsgemäß auch mittels der Befestigungselemente 4 befestigt.

Zur Befestigung des Innenverkleidungsbauteils 3 an den Befestigungselementen 4 stehen die Befestigungselemente 4 von dem Trägerbauteil 2 mit einem Kopfabschnitt 42 vor, mit dem das Innenverkleidungsbauteil 3 in der gezeigten Ausführung mechanisch verrastet wird. Andere formschlüssige und/oder kraftschlüssige Verbindungen sind jedoch auch denkbar und möglich.

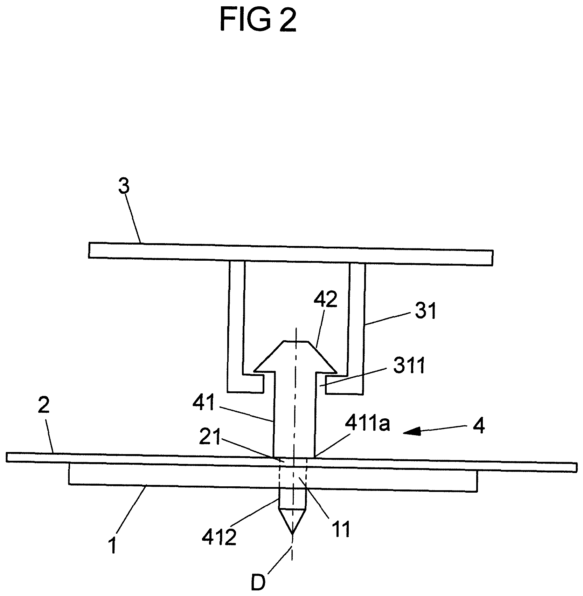

Fig. 2 zeigt ein Befestigungselement 4, das dazu genutzt ist, an einer Türhaut 1 ein Trägerbauteil 2 und ein Innenverkleidungsbauteil 3 zu befestigen. Das Befestigungselement 4 umfasst zur Befestigung des Innenverkleidungsbauteils 3 einen Kopfabschnitt 42, dessen Spitze kegelstumpfförmig ausgebildet ist. Das Innenverkleidungsbauteil 3 umfasst zur Befestigung an dem Kopfabschnitt 42 einen Rastabschnitt 31. Der Kopfabschnitt 42 und der Rastabschnitt 31 wirken zusammen, um das Innenverkleidungsbauteil 3 und das Befestigungselement 4 zu verbinden.

Der Rastabschnitt 31 umfasst zur Verbindung mit dem Kopfabschnitt 42 eine Aufnahme 311, durch die der Kopfabschnitt 42 in den Rastabschnitt 31 ragt. Die kegelstumpfförmige Spitze des Kopfabschnitts 42 ist im Innern des Rastabschnitts 31 angeordnet. Da die Grundfläche der kegelstumpfförmigen Spitze größer ist als die Querschnittsform der Aufnahme 311, sind der Kopfabschnitt 42 und der Rastabschnitt 31 miteinander mechanisch verrastet. Andere Ausführungen einer formschlüssigen Verbindung oder generell andere formschlüssige und/oder kraftschlüssige Verbindungen zwischen dem Innenverkleidungsbauteil 3 und dem Befestigungselement 4 sind denkbar und möglich.

Mittels der kegelstumpfförmige Spitze oder einer ähnlichen sich verjüngenden Spitze kann das Zusammenfügen von Rastabschnitt 31 und Kopfabschnitt 42 schnell und unter geringem Kraftaufwand erfolgen. In einem Ausführungsbeispiel wird die Aufnahme 311 beim Einstecken durch den Druck des Kegelmantels der kegelstumpfförmigen Spitze in einer Richtung senkrecht zur Einsteckrichtung geweitet, so dass der Kopfabschnitt 42 in den Rastabschnitt 31 einführbar ist.

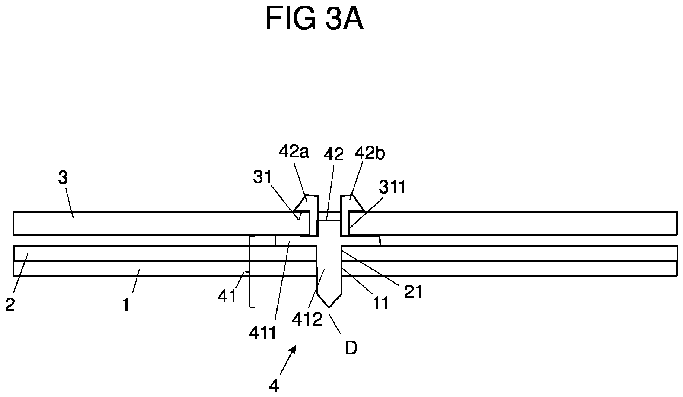

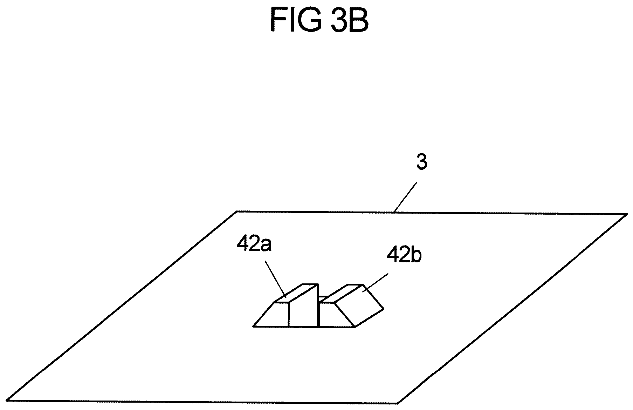

In dem in Fig. 3A und 3B dargestellten Ausführungsbeispiel wird beim Einstecken des Kopfabschnitts 42 in die Aufnahme 311 der Kopfabschnitt 42 unter dem Druck der Aufnahme 311 in einer Richtung senkrecht zur Einsteckrichtung komprimiert, so dass der Kopfabschnitt 42 in die Aufnahme 311 einführbar ist. Der Kopfabschnitt 42 umfasst zwei biegbare Rasthaken 42a, 42b. Die Rasthaken 42a, 42b sind durch einen angespritzten Kunststoffclip gebildet. Beim Einstecken des Kopfabschnitts 42 in die Aufnahme 311 verformt sich der Kopfabschnitt 42 im Bereich der Rasthaken 42a, 42b, d.h. die Rasthaken 42a, 42b werden zueinander hin gebogen. Dadurch wird ein Durchmesser des Kopfabschnitts 42 senkrecht zur Einsteckrichtung verkleinert. Nach der Passage durch die Aufnahme 311 können die Rasthaken 42a, 42b wieder in die Ausgangsposition zurückschnappen. Dadurch verrastet der Kopfabschnitt 42 mit dem Rastabschnitt 31 des Innenverkleidungsbauteils 3.

Ebenso ist eine Kombination aus einer weitbaren Aufnahme 311 und eines komprimierbaren oder verengbaren Kopfabschnitts 42 denkbar. Grundsätzlich kann ebenso das Befestigungselement 4 einen Rastabschnitt mit den Merkmalen des Rastabschnitt 31 und das Innenverkleidungsbauteil 3 einen Kopfabschnitt mit den Merkmalen des Kopfabschnitts 42 aufweisen.

Die Querschnittsform des Kopfabschnitts 42 ist, wie in Fig. 3B dargestellt, rechteckig. Die Aufnahme 311 ist ebenso rechteckig. Das heißt, die Form der Aufnahme 311 ist ausgelegt, um eine Passage des gegebenenfalls komprimierten oder verengten Kopfabschnitts 42 zu ermöglichen. Grundsätzlich ist auch eine abweichende Geometrie des Kopfabschnitts 42 und der Aufnahme 311 denkbar und möglich. Insbesondere können die Aufnahme 311 kreisförmig und der Kopfabschnitt 42 rund ausgebildet sein.

Weiterhin umfasst das Befestigungselement 4 einen Schaftabschnitt 41, der mit der Türhaut 1 verschraubt ist. Zum Befestigen an der Türhaut 1 umfasst die Türhaut 1 ein Durchgangsloch 11 und der Schaftabschnitt 41 einen Gewindeabschnitt 412 mit einem Gewinde. Der Gewindeabschnitt 412 ist an der Türhaut 1 in das Durchgangsloch 11 geschraubt, um das Trägerbauteil 2 an der Türhaut 1 festzulegen.

Zur Montage wird das Trägerbauteil 2 zur Befestigung an der Türhaut 1 mittels des Befestigungselements 4 durchstoßen, wodurch ein Durchbruch 21 im Trägerbauteil 2 erzeugt wird. Um ein Durchstoßen des Trägerbauteils 2 zu ermöglichen, ist das Gewinde des Befestigungselements 4 selbstschneidend ausgebildet. Außerdem verjüngt sich das Befestigungselement 4 zu einem dem Kopfabschnitt 42 entgegengesetztem Ende hin. In der montierten Türbaugruppe ragt das dem Kopfabschnitt 42 entgegengesetzte Ende des Befestigungselements 4 durch die Türhaut 1 hindurch.

Das Trägerbauteil 2 ist mit dem Befestigungselement 4 an der Türhaut 1 befestigt, wobei das Trägerbauteil 2 mit der einen Seite an der Türhaut 1 anliegt. An der anderen Seite des Trägerbauteils 2 liegt ein Absatz 411 des Befestigungselements 4 an, so dass das Trägerbauteil 2 zwischen der Türhaut 1 und dem Befestigungselement 4 festgelegt ist. Der Absatz 411 ist entlang einer Verbindungsachse D, die sich entlang des Befestigungselements 4 von dem Kopfabschnitt 42 über den Schaftabschnitt 41 erstreckt, angeordnet. In der dargestellten Ausführung ist der Absatz 411 durch eine Verkleinerung der Querschnittsform des Schaftabschnitts 41 entlang der Verbindungsachse D vom Kopfabschnitt 42 kommend gekennzeichnet. Vom Gewindeabschnitt 412 kommend ist der Absatz 411 folglich von einer Vergrößerung der Querschnittsform des Schaftabschnitts 41 gekennzeichnet. Der Absatz 411 ist orthogonal zur Verbindungsachse D erstreckt.

Zum Festlegen des Innenverkleidungsbauteils 3 an dem Kopfabschnitt 42 ist der Absatz 411 in der Ausführungsvariante der Fig. 3A als eine scheibenförmige Vergrößerung der Querschnittsform des Schaftabschnitts 41 ausgebildet. Grundsätzlich kann die Vergrößerung eine beliebige geometrische Form aufweisen. Das Innenverkleidungsbauteil 3 ist zwischen dem Kopfabschnitt 42 und dem Absatz 411 festgelegt, während das Trägerbauteil 2 zwischen der Türhaut 1 und dem Absatz 411 festgelegt ist. Alternativ kann vorgesehen sein, dass das Trägerbauteil 2 auf der einen Seite an der Türhaut 1 und auf der anderen Seite an dem Innenverkleidungsbauteil 3 anliegt.

### Bezugszeichenliste

- 1: Türhaut
- 11: Durchgangsloch
- 2: Trägerbauteil
- 21: Durchbruch
- 3: Innenverkleidungsbauteil
- 31: Rastabschnitt
- 311: Aufnahme
- 4: Befestigungselement
- 41: Schaftabschnitt
- 411: Absatz
- 412: Gewindeabschnitt
- 42: Kopfabschnitt
- 42a, 42b: Rasthaken

## Patentansprüche

1. Türbaugruppe für eine Kraftfahrzeugtür, mit
- einer Türhaut (1),
- einem flächigen Trägerbauteil (2), an dem Teile eines Kraftfahrzeugfensterhebers oder mindestens ein Lautsprecher befestigt sind, und
- einem Innenverkleidungsbauteil (3),
wobei das Trägerbauteil (2) mit mehreren Befestigungselementen (4) an der Türhaut (1) befestigt ist, die an einem umfangseitigen Rand des Trägerbauteils (2) angeordnet sind,
**dadurch gekennzeichnet, dass**
jedes Befestigungselement (4) auch zur Befestigung des Innenverkleidungsbauteils (3) genutzt ist, indem jedes Befestigungselement (4) an dem Trägerbauteil (2) mit einem in einem Querschnitt T-förmigen Kopfabschnitt (42) vorsteht, an dem das Innenverkleidungsbauteil (3) festgelegt ist, wobei
- der Kopfabschnitt (42) jeweils mit dem Innenverkleidungsbauteil (3) formschlüssig und/oder kraftschlüssig verbunden ist,
- das Innenverkleidungsbauteil (3) mehrere Rastabschnitte (31) aufweist, die jeweils mit einem Kopfabschnitt (42) eines Befestigungselements (4) mechanisch verrastet sind, und
- die Befestigungselemente (4) jeweils einen Schaftabschnitt (41) umfassen, der formschlüssig und/oder kraftschlüssig mit der Türhaut (1) verbunden ist, indem der Schaftabschnitt (41) einen Gewindeabschnitt (412) mit einem Gewinde umfasst, über das der Gewindeabschnitt (412) mit der Türhaut (1) verschraubt ist.

2. Türbaugruppe nach Anspruch 1, **dadurch gekennzeichnet, dass** der Kopfabschnitt (42) mindestens ein elastisch verformbares Rastelement zur Festlegung des Innenverkleidungsbauteils (3) umfasst.

3. Türbaugruppe nach Anspruch 2, **dadurch gekennzeichnet, dass** das mindestens eine Rastelement durch einen Rasthaken (42a, 42b) gebildet ist.

4. Türbaugruppe nach einem der Ansprüche 2 oder 3, **dadurch gekennzeichnet, dass** das mindestens eine Rastelement durch einen angespritzten Kunststoffclip gebildet ist.

5. Türbaugruppe nach einem der vorhergehenden Ansprüche, **dadurch gekennzeichnet, dass** der Schaftabschnitt (41) zum Erzeugen eines Durchbruchs (21) im Trägerbauteil (2) bei der Befestigung des Trägerbauteils (2) an der Türhaut (1) ausgebildet ist.

6. Türbaugruppe nach einem der vorhergehenden Ansprüche, **dadurch gekennzeichnet, dass** das Gewinde des Gewindeabschnitts (412) als ein selbstschneidendes Gewinde ausgebildet ist.

7. Türbaugruppe nach einem der vorhergehenden Ansprüche, **dadurch gekennzeichnet, dass** der Schaftabschnitt (41) einen Absatz (411) aufweist, an dem das Trägerbauteil (2) anliegt.

8. Türbaugruppe nach Anspruch 7, **dadurch gekennzeichnet, dass** der Absatz (411) als eine scheibenförmige Vergrößerung der Querschnittsform des Schaftabschnitts (41) ausgebildet ist.

9. Türbaugruppe nach Anspruch 8, **dadurch gekennzeichnet, dass** das Innenverkleidungsbauteil (3) an dem Absatz (411) anliegt.

10. Kraftfahrzeugtür mit einer Türbaugruppe nach einem der Ansprüche 1 bis 9.

11. Verfahren zur Montage einer Türbaugruppe mit einer Türhaut (1), einem flächigen Trägerbauteil (2), an dem Teile eines Kraftfahrzeugfensterhebers oder mindestens ein Lautsprecher befestigt sind, und einem Innenverkleidungsbauteil (3),
wobei das Trägerbauteil (2) mit mehreren Befestigungselementen (4) an der Türhaut (1) befestigt wird, die an einem umfangseitigen Rand des Trägerbauteils (2) angeordnet sind,
**dadurch gekennzeichnet, dass**
das Innenverkleidungsbauteil (3) über die mehreren Befestigungselemente (4), die jeweils auch für die Befestigung des Trägerbauteils (2) an dem Innenverkleidungsbauteil (3) genutzt werden, an dem Trägerbauteil (2) befestigt wird, indem das Innenverkleidungsbauteil (3) jeweils an einem in einem Querschnitt T-förmigen Kopfabschnitt (42) eines Befestigungselements (4) festgelegt wird, wobei
- der Kopfabschnitt (42) jeweils mit dem Innenverkleidungsbauteil (3) formschlüssig und/oder kraftschlüssig verbunden wird,
- das Innenverkleidungsbauteil (3) mehrere Rastabschnitte (31) aufweist, die jeweils mit einem Kopfabschnitt (42) eines Befestigungselements (4) mechanisch verrastet werden, und
- die Befestigungselemente (4) jeweils einen Schaftabschnitt (41) umfassen, der formschlüssig und/oder kraftschlüssig mit der Türhaut (1) verbunden wird, indem der Schaftabschnitt (41) einen Gewindeabschnitt (412) mit einem Gewinde umfasst, über das der Gewindeabschnitt (412) mit der Türhaut (1) verschraubt wird.

12. Verfahren nach Anspruch 11, **dadurch gekennzeichnet, dass** nach der Befestigung des Trägerbauteils (2) an der Türhaut (1) das Innenverkleidungsbauteil (3) an dem Kopfabschnitt (42) festgelegt wird.

13. Verfahren nach Anspruch 11 oder 12, **dadurch gekennzeichnet, dass** ein Durchbruch im Trägerbauteil (2) mittels des Gewindeabschnitts (412) eines Befestigungselements (4), der ein selbstschneidendes Gewinde aufweist, erzeugt wird.

## Claims

1. A door assembly for a motor vehicle door comprising
- a door skin (1),
- a flat carrier component (2) on which parts of a motor vehicle window lifter or at least one loudspeaker are mounted, and
- an interior panel component (3),
wherein the carrier component (2) is mounted on the door skin (1) by way of a plurality of mounting elements (4) which are arranged on a circumferential edge of the carrier component (2),
**characterized in that**
each mounting element (4) is also used to mount the interior panel component (3) in that each mounting element (4) protrudes on the carrier component (2) by way of a head portion (42) having a T-shaped cross-section, to which the interior panel component (3) is fixed, wherein
- the head portion (42) is connected in a positively locking and/or non-positively locking manner to the interior panel component (3),
- the interior panel component (3) has a plurality of latching portions (31), each of which is mechanically latched to a head portion (42) of a mounting element (4), and
- the mounting elements (4) each comprise a shank portion (41) which is connected in a positively locking and/or non-positively locking manner to the door skin (1), wherein the shank portion (41) comprises a threaded portion (412) with a thread, by way of which the threaded portion (412) is screwed to the door skin (1).

2. The door assembly as claimed in claim 1, **characterized in that** the head portion (42) comprises at least one elastically deformable latching element for fixing the interior panel component (3).

3. The door assembly as claimed in claim 2, **characterized in that** the at least one latching element is formed by a latching hook (42a, 42b).

4. The door assembly as claimed in claim 2 or 3, **characterized in that** the at least one latching element is formed by a plastic clip which has been molded on.

5. The door assembly as claimed in one of the preceding claims, **characterized in that** the shank portion (41) is formed to create an aperture (21) in the carrier component (2) when the carrier component (2) is being mounted on the door skin (1).

6. The door assembly as claimed in one of the preceding claims, **characterized in that** the thread of the threaded portion (412) is in the form of a self-tapping thread.

7. The door assembly as claimed in one of the preceding claims, **characterized in that** the shank portion (41) has a shoulder (411), against which the carrier component (2) bears.

8. The door assembly as claimed in claim 7, **characterized in that** the shoulder (411) is in the form of a disk-shaped enlargement of the cross-sectional form of the shank portion (41).

9. The door assembly as claimed in claim 8, **characterized in that** the interior panel component (3) bears against the shoulder (411).

10. A motor vehicle door having a door assembly as claimed in one of claims 1 to 9.

11. A method for assembling a door assembly having a door skin (1), a flat carrier component (2) on which parts of a motor vehicle window lifter or at least one loudspeaker are mounted, and an interior panel component (3),
wherein the carrier component (2) is mounted on the door skin (1) by way of a plurality of mounting elements (4) which are arranged on a circumferential edge of the carrier component (2),
**characterized in that**
the interior panel component (3) is mounted on the carrier component (2) by way of the plurality of mounting elements (4), which each are also used for mounting the carrier component (2) on the interior panel component (3), by the interior panel component (3) being fixed to a respective head portion (42) of a mounting element (4) having a T-shaped cross-section, wherein
- the head portion (42) is connected in a positively locking and/or non-positively locking manner to the interior panel component (3),
- the interior panel component (3) has a plurality of latching portions (31), each of which is mechanically latched to a head portion (42) of a mounting element (4), and
- the mounting elements (4) each comprise a shank portion (41) which is connected in a positively locking and/or non-positively locking manner to the door skin (1), wherein the shank portion (41) comprises a threaded portion (412) with a thread, by way of which the threaded portion (412) is screwed to the door skin (1).

12. The method as claimed in claim 11, **characterized in that** the interior panel component (3) is fixed to the head portion (42) after the carrier component (2) has been mounted on the door skin (1).

13. The method as claimed in claim 11 or 12, **characterized in that** an aperture in the carrier component (2) is created by means of the threaded portion (412) of a mounting element (4) that has a self-tapping thread.

## Revendications

1. Module de porte pour une porte de véhicule automobile, avec
- une enveloppe de porte (1),
- un composant de support (2) plat, auquel sont fixées des parties d'un lève-vitre de véhicule automobile ou au moins un haut-parleur, et
- un composant de revêtement intérieur (3),
dans lequel le composant de support (2) est fixé à l'enveloppe de porte (1) avec plusieurs éléments de fixation (4), qui sont disposés sur un bord côté périphérie du composant de support (2),
**caractérisé en ce que**
chaque élément de fixation (4) est aussi utilisé pour la fixation du composant de revêtement intérieur (3), chaque élément de fixation (4) dépasse au niveau du composant de support (2) avec une section de tête (42) en forme de T en section transversale, au niveau de laquelle le composant de revêtement intérieur (3) est fixé, dans lequel
- la section de tête (42) est reliée respectivement au composant de revêtement intérieur (3) par complémentarité de formes et/ou à force,
- le composant de revêtement intérieur (3) présente plusieurs sections d'encliquetage (31) qui sont respectivement encliquetées mécaniquement à une section de tête (42) d'un élément de fixation (4), et
- les éléments de fixation (4) comprennent respectivement une section d'arbre (41) qui est reliée par complémentarité de formes et/ou à force à l'enveloppe de porte (1), **en ce que** la section d'arbre (41) comprend une section de filetage (412) avec un filetage, par le biais duquel la section de filetage (412) est vissée à l'enveloppe de porte (1).

2. Module de porte selon la revendication 1, **caractérisé en ce que** la section de tête (42) comprend au moins un élément d'encliquetage élastiquement déformable pour la fixation du composant de revêtement intérieur (3).

3. Module de porte selon la revendication 2, **caractérisé en ce que** l'au moins un élément d'encliquetage est formé par un crochet d'encliquetage (42a, 42b).

4. Module de porte selon l'une quelconque des revendications 2 ou 3, **caractérisé en ce que** l'au moins un élément d'encliquetage est formé par un clip en plastique moulé par injection.

5. Module de porte selon l'une quelconque des revendications précédentes, **caractérisé en ce que** la section d'arbre (41) est réalisée pour la génération d'une percée (21) dans le composant de support (2) lors de la fixation du composant de support (2) à l'enveloppe de porte (1).

6. Module de porte selon l'une quelconque des revendications précédentes, **caractérisé en ce que** le filetage de la section de filetage (412) est réalisé en tant que filetage autotaraudeur.

7. Module de porte selon l'une quelconque des revendications précédentes, **caractérisé en ce que** la section d'arbre (41) présente un épaulement (411), contre lequel repose le composant de support (2).

8. Module de porte selon la revendication 7, **caractérisé en ce que** l'épaulement (411) est réalisé en tant qu'agrandissement en forme de disque de la forme de section transversale de la section d'arbre (41).

9. Module de porte selon la revendication 8, **caractérisé en ce que** le composant de revêtement intérieur (3) repose contre l'épaulement (411).

10. Porte de véhicule automobile avec un module de porte selon l'une quelconque des revendications 1 à 9.

11. Procédé de montage d'un module de porte avec une enveloppe de porte (1), un composant de support (2) plat auquel sont fixées des parties d'un lève-vitre de véhicule automobile ou au moins un haut-parleur, et un composant de revêtement intérieur (3),
dans lequel le composant de support (2) est fixé à l'enveloppe de porte (1) avec plusieurs éléments de fixation (4), qui sont disposés sur un bord côté périphérie du composant de support (2),
**caractérisé en ce que**
le composant de revêtement intérieur (3) est fixé respectivement au composant de support (2) par le biais des plusieurs éléments de fixation (4), qui sont aussi utilisés pour la fixation du composant de support (2) au composant de revêtement intérieur (3), **en ce que** le composant de revêtement intérieur (3) est fixé à une section de tête (42) en forme de T en section transversale d'un élément de fixation (4), dans lequel
- la section de tête (42) est reliée respectivement au composant de revêtement intérieur (3) par complémentarité de formes et/ou à force,
- le composant de revêtement intérieur (3) présente plusieurs sections d'encliquetage (31) qui sont respectivement encliquetées mécaniquement à une section de tête (42) d'un élément de fixation (4), et
- les éléments de fixation (4) comprennent respectivement une section d'arbre (41) qui est reliée par complémentarité de formes et/ou à force à l'enveloppe de porte (1), **en ce que** la section d'arbre (41) comprend une section de filetage (412) avec un filetage, par le biais duquel la section de filetage (412) est vissée à l'enveloppe de porte (1).

12. Procédé selon la revendication 11, **caractérisé en ce qu'**après la fixation du composant de support (2) à l'enveloppe de porte (1), le composant de revêtement intérieur (3) est fixé à la section de tête (42).

13. Procédé selon la revendication 11 ou 12, **caractérisé en ce qu'**une percée est générée dans le composant de support (2) au moyen de la section de filetage (412) d'un élément de fixation (4), qui présente un filetage autotaraudeur.
